# EUROPÄISCHE PATENTANMELDUNG

(11) **EP 4 180 220 A1**
(43) Veröffentlichungstag der Anmeldung: **17.05.2023**
(21) Anmeldenummer: 21208206.9
(22) Anmeldetag: 15.11.2021
(51) Int. Cl.: B32B 7/06, B32B 27/10, D21H 19/00, G09F 3/00, B32B 7/12

(54) **SCHICHTVERBUND ZUR HERSTELLUNG EINES SICHERHEITSETIKETTS**

(71) Anmelder: Hueck Folien Gesellschaft m.b.H., 4342 Baumgartenberg (AT)
(72) Erfinder: RICKER, Waltraud, 3321 Ardagger Markt (AT); HILBURGER, Johann, 92712 Pirk (DE)
(74) Vertreter: Burger, Hannes

(57) **Zusammenfassung**

Die Erfindung betrifft einen Schichtverbund (1) zur Herstellung eines Sicherheitsetiketts (2) und ein Sicherheitsetikett (2) mit einem Manipulationsnachweis, wobei das Sicherheitsetikett (2) ein Trägersubstrat (3), zumindest eine, insbesondere direkt, auf das Trägersubstrat (3) aufgebrachte Trennschicht (4), zumindest eine auf einer dem Trägersubstrat (3) abgewandten Seite der Trennschicht (4), bevorzugt direkt auf die Trennschicht (4), aufgebrachte, insbesondere partielle, Druckschicht (5) aufweist, wobei eine der Trennschicht (4) zugewandte Oberfläche des Trägersubstrates (3) vollflächig von der Trennschicht (4) bedeckt ist, und der Schichtverbund auf einer dem Trägersubstrat abgewandten, die Druckschicht (5) aufweisenden Seite eine vollflächige Barriereschicht (6) aufweist, durch welche ein Eindringen eines Klebstoffes in den Schichtverbund (1) verhindert ist, wobei die Druckschicht (5) zwischen der Barriereschicht (6) und der Trennschicht (4) angeordnet ist.

## Beschreibung

Die Erfindung betrifft einen Schichtverbund zur Herstellung eines Sicherheitsetiketts mit einem Manipulationsnachweis, wobei der Schichtverbund ein Trägersubstrat, zumindest eine, insbesondere direkt, auf das Trägersubstrat aufgebrachte Trennschicht, zumindest eine auf einer dem Trägersubstrat abgewandten Seite der Trennschicht, bevorzugt direkt auf die Trennschicht, aufgebrachte, insbesondere partielle, Druckschicht aufweist.

Weiters betrifft die Erfindung ein Sicherheitsetikett.

Darüber hinaus betrifft die Erfindung einen Gegenstand mit einem Sicherheitsetikett.

Sicherheitsetiketten mit Schichtaufbauten der eingangs genannten Art werden häufig dazu verwendet, Gegenstände beispielsweise Verpackungen zu sichern. Zweck derartiger Sicherheitsetiketten ist es, eine Manipulation, beispielsweise in Form eines Öffnen und Wiederverschließen einer Verpackung oder eines Ablösen und Wiederaufbringen des Sicherheitsetiketts auf einer Oberfläche eines Gegenstandes, erkennbar zu machen.

Bei herkömmlichen Sicherheitsetiketten, die einen Schichtverbund der eingangs genannten Art aufweisen, kann es dazu kommen, dass bei einem Ablösen von Teilen des Sicherheitsetiketts von einer Oberfläche eines Gegenstandes Rückstände eines Klebstoffs, mit dem das Sicherheitsetikett mit dem Gegenstand verbunden ist an von dem Gegenstand abgelösten Teilen des Sicherheitsetiketts verbleiben bzw. auf dem Gegenstand befindliche Abschnitte der Klebstoff freigelegt werden, sodass ein Wiederaufkleben des Sicherheitsetiketts möglich ist.

Es ist daher eine Aufgabe der Erfindung die oben genannten Nachteile des Stands der Technik zu überwinden und die Manipulationssicherheit zur erhöhen.

Diese Aufgabe wird mit einem Schichtaufbau der eingangs genannten Art erfindungsgemäß dadurch gelöst, dass eine der Trennschicht zugewandte Oberfläche des Trägersubstrates vollflächig von der Trennschicht bedeckt ist, und der Schichtverbund eine vollflächige Barriereschicht aufweist, durch welche ein Eindringen eines Klebstoffes in den Schichtverbund verhindert ist, wobei die Druckschicht zwischen der Barriereschicht und der Trennschicht angeordnet ist.

Durch die erfindungsgemäße Lösung wird es ermöglicht, dass bei einer Trennung des Schichtverbundes in oder an der Trennschicht bei Verwendung des Schichtverbundes in einem Sicherheitsetikett ein zwischen der Barriereschicht und einem Gegenstand aufgebrachter Klebstoff stets von der Barriereschicht abgedeckt bleibt, wodurch ein Wiederaufkleben des Sicherheitsetiketts nach dessen Ablösen von dem Gegenstand verhindert werden kann.

Gemäß einer vorteilhaften Variante der Erfindung, mit welcher sich ein gutes Trennen des Schichtaufbaus realisieren lässt, kann es vorgesehen sein, dass eine Adhäsion zwischen der Trennschicht und dem Trägersubstrat und eine Adhäsion zwischen Trennschicht und Druckschicht und/oder Barriereschicht größer ist als eine Kohäsion der Trennschicht, oder dass eine Adhäsion zwischen der Trennschicht und der Druckschicht und/oder der Barriereschicht kleiner ist als eine Kohäsion der Trennschicht und eine Haftung zwischen der Trennschicht und dem Trägersubstrat. Wenn der innere Zusammenhalt (Kohäsion) der Trennschicht geringer ist als die Haftung (Adhäsion) der Trennschicht zu benachbarten Schichten lässt sich eine in sich trennende Trennschicht realisieren, sodass bei einem Ablösen des Sicherheitsetiketts von einem Gegenstand eine Trennfläche des Sicherheitsetiketts in der Trennschicht verläuft. Eine Trennung des Schichtaufbaus bei einem Ablösen des Sicherheitsetiketts von einem Gegenstand in einen abgelösten Teil und in einen auf dem Gegenstand verbleibenden Teil erfolgt in diesem Fall innerhalb der Trennschicht.

Wenn die Haftung der Trennschicht zum Substrat und der innere Zusammenhalt jedoch größer sind als eine Haftung zur Druckschicht und/oder zur Barriereschicht, so kann eine Trennung des Schichtaufbaus bei einem Ablösen eines auf einem Gegenstand aufgebrachten Sicherheitsetiketts an einer Schichtgrenze zur Druckschicht und/oder zur Barriereschicht erfolgen.

Als Trennschicht können für alle oben genannten Arten von Trennschichten schlecht haftende Lackzusammensetzungen, beispielsweise auf Basis von Cycloolefincopolymeren, Nitrocellulose, Acrylaten, Polyvinylchlorid, Ethylenacrylatcopolymeren oder Styrolacrylaten in einem geeigneten Lösungsmittel Verwendung finden. Zur Einstellung der Trenneigenschaften können vorzugsweise chlorierte Polyolefine zugesetzt werden. Der Anteil der chlorierten Polyolefine in der Zusammensetzung kann 1 - 50 Gew%, vorzugsweise 1 - 25 Gew%, besonders bevorzugt 1 bis 15 Gew% im Verhältnis zum Basispolymer betragen. Ferner können auch sehr dünn aufgetragene Polyamid-, Polyethylen-, Fluorpolymerwachsschichten oder Silikonbeschichtungen als Trennschicht verwendet werden.

Als besonders vorteilhaft hat sich herausgestellt, dass das Trägersubstrat aus Papier ist. Diese Variante der Erfindung eignet sich besonders gut zur Herstellung von Sicherheitsetiketten, die für die Manipulationsnachweise an Papierverpackungen, insbesondere Umverpackungen aus Papier, geeignet ist. Auch hinsichtlich eines Recyclings ergeben sich Vorteile, da bei Aufbringung des Sicherheitsetiketts auf einem Gegenstand aus Papier das Sicherheitsetikett gemeinsam mit dem Gegenstand einem Recycling zugeführt werden kann und eine stoffliche Trennung nicht erforderlich ist. Darüber hinaus ist die Verwendung von Papier als Substrat des Schichtaufbaus aufgrund der Eigenschaft von Papier bei einer Manipulation zu reißen ebenfalls von Vorteil. Bei dem Papier des Trägersubstrats kann es sich beispielsweise auch um transparentes Papier und/oder Seidenpapier handeln. Dies hat den Vorteil, dass die Druckschicht bzw. ein Sicherheitsdruck auch durch das aufgeklebte Etikett hindurch wahrgenommen werden kann.

Als besonders vorteilhaft hinsichtlich eines optimalen Manipulationsnachweises und einer guten mechanischen Stabilität während des Herstellungsprozesses sowie einer guten Handhabbarkeit nach Fertigstellung des Schichtaufbaus hat sich eine Variante der Erfindung erwiesen, bei welcher das Papier ein Flächengewicht von 20 - 400 g/m², bevorzugt 20 - 250 g/m², besonders bevorzugt 20 - 150 g/m², aufweist.

Das Eindringen von Klebstoff in den Schichtaufbau lässt sich besonders gut dadurch verhindern, dass die Barriereschicht eine Dicke zwischen 1 - 30 µm, bevorzugt 1 - 20 µm aufweist.

Gemäß einer vorteilhaften Weiterbildung der Erfindung, welche sich ebenfalls durch eine besonders gute Barrierewirkung gegenüber einem Eindringen von Klebstoff auszeichnet, kann es vorgesehen sein, dass die Barriereschicht einen Lack, insbesondere einen polymerbasierten Lack, umfasst bzw. durch eine Lackschicht gebildet ist.

Vorteilhafterweise weist die Barriereschicht zwischen 40 - 95 Gew.% zumindest eines Polymers, insbesondere zumindest eines Acrylat und/oder Acryclatcopolymers und/oder zumindest eines Urethans und/oder zumindest eines Urethancopolymers und/oder zumindest eines Alkyds und/oder zumindest eines Alkydacrylcopolymers und/oder eines Biopolymers und/oder zumindest eines Silicats und/oder einer Cellulose und/oder aus Mischungen dieser Stoffe aufweist. Durch den hohen Polymeranteil lässt sich die Barrierewirkung gegenüber Klebstoff weiter verbessern.

Darüber hinaus kann es vorgesehen sein, dass die Barriereschicht 5 - 60 Gew% an Füllstoffen, insbesondere organische Füllstoffe und/oder anorganische Füllstoffe, insbesondere mineralische Füllstoffe, beispielsweise Kalk und/oder Steinmehl, aufweist. Durch die Verwendung von Füllstoffen lässt sich ein Bindemittel mit einem hohen Feststoffgehalt realisieren, was hinsichtlich der Herstellung von Vorteil ist, da sich dadurch die Barriereschicht besser aufbringen lässt und ein Verrinnen unterbunden werden kann. Darüber hinaus lässt sich durch die Verwendung von natürlichen Materialien oder von aus nachwachsenden Rohstoffen hergestellten Materialien als Füllstoffe eine Umweltverträglichkeit des Schichtaufbaus erhöhen. Weiters kann die Barriereschicht auch eine Folie umfassen bzw. als Folie ausgebildet sein. Die Folie kann beispielsweise mittels eines Kaschierkleber auf das Trägersubstrat aufgebracht werden. Dieser Kaschierkleber kann auch als Trennschicht fungieren. Es kann aber auch sein, dass dieser Kaschierkleber zusätzlich zur Trennschicht und zwischen Trennschicht und Folie vorhanden ist. Besonders bevorzugt ist es, wenn die Folie recyclebar bzw. biologisch oder marin abbaubar ist.

Als besonders vorteilhaft hat sich herausgestellt, dass die Trennschicht eine Dicke zwischen 0,2 - 4 µm aufweist. Durch diese Variante der Erfindung kann sowohl ein Eindringen von Material anderer Schichten als der Trennlackschicht in das Substrat verhindert als auch eine gute Trennwirkung realisiert werden. Somit wird hierdurch ein optimaler Schutz des Substrates, was vor allem bei Verwendung von Papier als Substrat von Vorteil ist, sowie eine gute Trennwirkung innerhalb der Schicht oder auch an einer Schichtgrenze ermöglicht.

Bevorzugt kann die zumindest eine Druckschicht durch zumindest eine Druckfarbe, insbesondere eine Tinte, gebildet sein. Durch die Verwendung von Druckfarbe lässt sich das Aufbringen von unterschiedlichen Motiven auf einfache Weise bewerkstelligen. Wenn die Trennschicht in sich trennend ist, bleibt der Aufdruck bei einer Trennung des Schichtaufbaus unbeschädigt und ist somit gut lesbar. Ein auf der Druckschicht verbleibender Teil der Trennschicht kann hierbei nach Trennen des Schichtaufbaus als Schutzschicht für die Druckschicht auf der Druckschicht verbleiben. Alternativ kann der Aufdruck aber auch bei Trennung an einer Grenzschicht zwischen Trennschicht und Druckschicht die Druckschicht ungeschützt und von der Trennschicht unbedeckt auf der Barriereschicht verbleiben.

Besonders vorteilhaft ist es, wenn die Druckschicht zumindest einen Schriftzug und/oder zumindest ein ikonisches Zeichen und/oder zumindest ein alphanumerisches Zeichen darstellt. Diese Variante der Erfindung ermöglicht es eine eindeutige, visuelle Information über die Manipulation des Sicherheitsetiketts zu geben. So könnte beispielsweise der Schriftzug "geöffnet" oder "ungültig" oder ein entsprechendes ikonographisches Zeichen, beispielsweise ein "x" oder Ähnliches aufgedruckt werden.

Die oben genannte Aufgabe lässt sich auch mit einem Sicherheitsetikett der eingangs genannten Art erfindungsgemäß dadurch lösen, dass es einen Schichtverbund nach einem der Ansprüche 1 bis 9 umfasst.

Um das Sicherheitsetikett mit einem Gegenstand zu verbinden kann es einen auf der Barriereschicht aufgebrachten Klebstoff aufweisen.

Als besonders vorteilhaft hinsichtlich eines Nachweises einer Manipulation des Sicherheitsetiketts hat sich herausgestellt, dass eine Adhäsion zwischen Klebstoff und einer Oberfläche des Gegenstandes größer ist als eine Kohäsion der Trennschicht oder eine Adhäsion zwischen der Trennschicht und der Druckschicht und/oder der Barriereschicht. Auf diese Weise lässt sich gewährleisten, dass bei einer Manipulation des Sicherheitsetiketts die Barriereschicht auf dem Gegenstand verbleibt und den darunter befindliche Klebstoff vollständig abdeckt, sodass ein Wiederankleben eines abgelösten Teils des Sicherheitsetiketts mittels des Klebstoffes nicht mehr möglich ist.

Hinsichtlich eines Recyclings hat es sich als besonders vorteilhaft herausgestellt, dass Trägersubstrat aus einem gleichartigen Material wie ein Teil des Gegenstandes gebildet ist, auf welchen Teil das Sicherheitsetikett aufgebracht ist.

Zum besseren Verständnis der Erfindung wird diese anhand der nachfolgenden Figuren näher erläutert.

Es zeigt in stark vereinfachter, schematischer Darstellung:

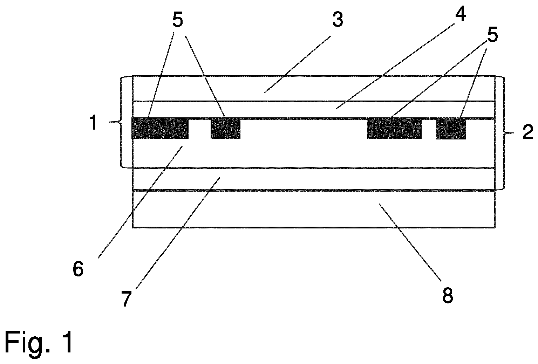

- Fig. 1: Einen Schichtaufbau eines Sicherheitsetiketts, welches auf einem Gegenstand angebracht ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Gemäß Fig.1 weist ein Schichtverbund 1 zur Herstellung eines Sicherheitsetiketts 2 mit einem Manipulationsnachweis, ein Trägersubstrat 3 und eine Trennschicht 4 auf. Bei dem Trägersubstrat 3 handelt es sich bevorzugt um ein Papier, welches beispielsweise ein Flächengewicht von 20 - 400 g/m², bevorzugt 20 - 150 g/m², besonders bevorzugt 20 - 150 g/m², aufweisen kann.

Die Trennschicht 4 kann direkt auf das Trägersubstrat 3 aufgebracht sein. Eine der Trennschicht 4 zugewandte Oberfläche des Trägersubstrates 3 ist vollflächig von der Trennschicht 4 bedeckt. die Trennschicht 4 weist bevorzugt eine Dicke zwischen 0,2 - 4 µm auf.

Wie bereits eingangs erwähnt kann die Trennschicht 4 aus schlecht haftenden Lackzusammensetzungen, beispielsweise auf Basis von Cycloolefincopolymeren, Nitrocellulose, Acrylaten, Polyvinylchlorid, Ethylenacrylatcopolymeren oder Styrolacrylaten in einem geeigneten Lösungsmittel hergestellt werden. Zur Einstellung der Trenneigenschaften können vorzugsweise chlorierte Polyolefine zugesetzt werden. Der Anteil der chlorierten Polyolefine in der Zusammensetzung kann 1 - 50 Gew%, vorzugsweise 1 - 25 Gew%, besonders bevorzugt 1 bis 15 Gew% im Verhältnis zum Basispolymer betragen. Ferner können auch sehr dünn aufgetragene Polyamid-, Polyethylen-, Fluorpolymerwachsschichten oder Silikonbeschichtungen als Trennschicht verwendet werden.

Auf einer dem Trägersubstrat 3 abgewandten Seite der Trennschicht 4 ist eine Druckschicht 5 aufgebracht. Die Druckschicht 5 ist bevorzugt als eine partielle Schicht ausgebildet und stellt beispielsweise einen Schriftzug und/oder zumindest ein ikonisches Zeichen und/oder zumindest ein alphanumerisches Zeichen dar. Zur Herstellung der Druckschicht 5 kann eine Druckfarbe, insbesondere eine Tinte verwendet werden. Die Druckschicht 5 kann direkt auf die Trennschicht 4 aufgebracht sein, beispielsweise mittels eines Digital- oder Tiefdruckverfahrens.

Weiters weist der Schichtaufbau 1 eine vollflächige Barriereschicht 6 auf, durch welche ein Eindringen eines Klebstoffes 7 in den Schichtverbund 1 verhindert ist. Die Druckschicht 5 ist hierbei zwischen der Barriereschicht 6 und der Trennschicht 4 angeordnet.

Die Barriereschicht 6 weist bevorzugt eine Dicke von 1 - 30 µm, besonders bevorzugt 1- 20 µm auf. Bevorzugt ist die Barriereschicht 6 aus einem polymerbasierten Lack gebildet bzw. umfasst einen derartigen Lack. Hierbei kann die Barriereschicht 6 zwischen 40 - 95 Gew.% zumindest eines Polymers, insbesondere zumindest eines Acrylat und/oder Acryclatcopolymers und/oder zumindest eines Urethans und/oder zumindest eines Urethancopolymers und/oder zumindest eines Alkyds und/oder zumindest eines Alkydacrylcopolymers und/oder eines Biopolymers und/oder zumindest eines Silicats und/oder einer Cellulose und/oder aus Mischungen dieser Stoffe bzw. Materialien aufweisen. Zudem kann die Barriereschicht 6 zwischen 5 - 60 Gew% an Füllstoffen, insbesondere organische Füllstoffe und/oder anorganische Füllstoffe, insbesondere mineralische Füllstoffe, beispielsweise Kalk und/oder Steinmehl, aufweisen. Alternativ oder zusätzlich zur Verwendung eines Lacks kann die Barriereschicht 6 eine Folie umfassen bzw. aus einer Folie gebildet sein. Wie bereits oben erwähnt, kann die Folie beispielsweise mittels eines Kaschierkleber auf das Trägersubstrat 3 aufgebracht werden. Dieser Kaschierkleber kann auch als Trennschicht 4 fungieren. Es kann aber auch sein, dass dieser Kaschierkleber zusätzlich zur Trennschicht 4 und zwischen Trennschicht 4 und Folie vorhanden ist. Besonders bevorzugt ist es, wenn die Folie recyclebar bzw. biologisch oder marin abbaubar ist.

Eine Adhäsion zwischen der Trennschicht 4 und dem Trägersubstrat 3 und eine Adhäsion zwischen Trennschicht 4 und Druckschicht 5 und/oder Barriereschicht 6 kann größer sein als eine Kohäsion der Trennschicht 4, wodurch eine Trennung des Schichtaufbaus 1 bei einer Manipulation des mittels des Klebstoffes 7 auf einem Gegenstand 8 aufgeklebten Sicherheitsetiketts 2 innerhalb der Trennschicht 4 erfolgt und eine in sich trennende Trennschicht 4 realisiert wird.

Alternativ kann aber auch eine Adhäsion zwischen der Trennschicht 4 und der Druckschicht 5 und/oder der Barriereschicht 6 kleiner sein als eine Kohäsion der Trennschicht 4 und eine Adhäsion zwischen der Trennschicht 4 und dem Trägersubstrat 3, wodurch eine Trennung des Schichtaufbaus entlang einer Grenzfläche zwischen Druckschicht 5 und Barriereschicht 7 einerseits und Trennschicht 4 andererseits bei einer Manipulation (Ablösen) des Sicherheitsetiketts 2 von dem Gegenstand 8 erfolgt.

Hierbei ist es natürlich von Vorteil, wenn eine Adhäsion zwischen dem Klebstoff 7 und einer Oberfläche des Gegenstandes 8 größer ist als eine Kohäsion der Trennschicht 4 oder eine Adhäsion zwischen der Trennschicht 4 und der Druckschicht 5 und/oder der Barriereschicht 6.

Bei einem Ablösen des Sicherheitsetiketts 2 von dem Gegenstand 8 verbleibt die Barriereschicht 6 zur Gänze auf der Oberfläche des Gegenstandes 8 und deckt den zwischen Barriereschicht 6 und Oberfläche des Gegenstandes 8 befindlichen Klebstoff 7 zur Gänze ab. Da die Barriereschicht 6 für den Klebstoff 7 undurchdringlich ist, kann der abgelöste Teil des Sicherheitsetiketts 2 nicht mehr mit dem Klebstoff 7 in Verbindung und auf die Oberfläche des Gegenstandes 8 aufgebracht werden. Zudem verbleibt auch die Druckschicht 5 auf dem Gegenstand 8 und zeigt eine Manipulation visuell an.

Abschließend sei erwähnt, dass besonders das Trägersubstrat 3 besonders bevorzugt aus einem gleichartigen Material wie ein Teil des Gegenstandes 8 gebildet ist, auf welchen Teil das Sicherheitsetikett 2 aufgebracht ist. So kann, falls der Gegenstand 8 beispielsweise eine Verpackung aus Papier ist, das Trägersubstrat 3, wie bereits oben erwähnt, aus Papier gebildet sein.

Selbstverständlich können neben den bereits erwähnten Schichten auch noch weitere Schichten, wie beispielsweise Folien, Kleber- und/oder Schutzlacklacksichten, etc. im Schichtaufbau vorhanden sein.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Schichtaufbau
- 2: Sicherheitsetikett
- 3: Trägersubstrat
- 4: Trennschicht
- 5: Druckschicht
- 6: Barriereschicht
- 7: Klebstoff
- 8: Gegenstand

## Patentansprüche

1. Schichtverbund (1) zur Herstellung eines Sicherheitsetiketts (2) mit einem Manipulationsnachweis, wobei der Schichtverbund (1) ein Trägersubstrat (3), zumindest eine, insbesondere direkt, auf das Trägersubstrat (3) aufgebrachte Trennschicht (4), zumindest eine auf einer dem Trägersubstrat (3) abgewandten Seite der Trennschicht (4), bevorzugt direkt auf die Trennschicht (4), aufgebrachte, insbesondere partielle, Druckschicht (5) aufweist, **dadurch gekennzeichnet, dass** eine der Trennschicht (4) zugewandte Oberfläche des Trägersubstrates (3) vollflächig von der Trennschicht (4) bedeckt ist, und der Schichtverbund eine vollflächige Barriereschicht (6) aufweist, durch welche ein Eindringen eines Klebstoffes (7) in den Schichtverbund (1) verhindert ist, wobei die Druckschicht (5) zwischen der Barriereschicht (6) und der Trennschicht (4) angeordnet ist.

2. Schichtverbund nach Anspruch 1, **dadurch gekennzeichnet, dass** eine Adhäsion zwischen der Trennschicht (4) und dem Trägersubstrat (3) und eine Adhäsion zwischen Trennschicht (4) und Druckschicht (5) und/oder Barriereschicht (6) größer ist als eine Kohäsion der Trennschicht (4), oder dass eine Adhäsion zwischen der Trennschicht (4) und der Druckschicht und/oder der Barriereschicht (6) kleiner ist als eine Kohäsion der Trennschicht (4) und eine Adhäsion zwischen der Trennschicht (4) und dem Trägersubstrat (3).

3. Schichtverbund nach Anspruch 1 oder 2, **dadurch gekennzeichnet, dass** das Trägersubstrat (3) aus Papier ist.

4. Schichtverbund nach Anspruch 3, **dadurch gekennzeichnet, dass** das Papier ein Flächengewicht von 20 - 400 g/m², bevorzugt 20 - 150 g/m², besonders bevorzugt 20 - 150 g/m², aufweist.

5. Schichtverbund nach einem der Ansprüche 1 bis 4, **dadurch gekennzeichnet, dass** die Barriereschicht (6) eine Dicke zwischen 1 - 30 µm, bevorzugt 1 - 20 µm aufweist.

6. Schichtverbund nach einem der Ansprüche 1 bis 5, **dadurch gekennzeichnet, dass** die Barriereschicht (6) einen Lack, insbesondere einem polymerbasierten Lack umfasst.

7. Schichtverbund nach Anspruch 6, **dadurch gekennzeichnet, dass** die Barriereschicht (6) zwischen 40 - 95 Gew.% zumindest eines Polymers, insbesondere zumindest eines Acrylat und/oder Acryclatcopolymers und/oder zumindest eines Urethans und/oder zumindest eines Urethancopolymers und/oder zumindest eines Alkyds und/oder zumindest eines Alkydacrylcopolymers und/oder eines Biopolymers und/oder zumindest eines Silicats und/oder einer Cellulose und/oder Mischungen dieser Stoffe aufweist.

8. Schichtverbund nach einem der Ansprüche 6 oder 7, **dadurch gekennzeichnet, dass** die Barriereschicht (6) 5 - 60 Gew% an Füllstoffen, insbesondere organische Füllstoffe und/oder anorganische Füllstoffe, insbesondere mineralische Füllstoffe, beispielsweise Kalk und/oder Steinmehl, aufweist.

9. Schichtverbund nach einem der Ansprüche 1 bis 8, **dadurch gekennzeichnet, dass** die Barriereschicht (6) eine Folie umfasst.

10. Schichtverbund nach einem der Ansprüche 1 bis 9, **dadurch gekennzeichnet, dass** die Trennschicht (4) eine Dicke zwischen 0,2 - 4 µm aufweist.

11. Schichtverbund nach einem der Ansprüche 1 bis 10, **dadurch gekennzeichnet, dass** die zumindest ein Druckschicht (5) durch zumindest eine Druckfarbe, insbesondere eine Tinte, gebildet ist.

12. Schichtverbund nach einem der Ansprüche 1 bis 11, **dadurch gekennzeichnet, dass** die Druckschicht (5) zumindest einen Schriftzug und/oder zumindest ein ikonisches Zeichen und/oder zumindest ein alphanumerisches Zeichen darstellt.

13. Sicherheitsetikett (2), **dadurch gekennzeichnet, dass** es einen Schichtverbund nach einem der Ansprüche 1 bis 12 umfasst.

14. Sicherheitsetikett nach Anspruch 13, **dadurch gekennzeichnet, dass** der Klebstoff (7) auf der Barriereschicht (6) aufgebracht ist.

15. Gegenstand (8) mit einem Sicherheitsetikett (2) nach Anspruch 14 **dadurch gekennzeichnet, dass** eine Adhäsion zwischen dem Klebstoff (7) und einer Oberfläche des Gegenstandes (8) größer ist als eine Kohäsion der Trennschicht (4) oder eine Adhäsion zwischen der Trennschicht (4) und der Druckschicht und/oder der Barriereschicht.

16. Gegenstand nach Anspruch 15, **dadurch gekennzeichnet, dass** Trägersubstrat (3) aus einem gleichartigen Material wie ein Teil des Gegenstandes (8) gebildet ist, auf welchen Teil das Sicherheitsetikett (2) aufgebracht ist.
